# EUROPEAN PATENT APPLICATION

(11) **EP 3 925 854 A1**
(43) Date of publication of application: **22.12.2021**
(21) Application number: 20795848.9
(22) Date of filing: 25.02.2020
(51) Int. Cl.: B61L 27/00

(54) **VEHICLE OPERATION PLAN CREATION DEVICE, VEHICLE OPERATION PLAN CREATION METHOD, AND VEHICLE OPERATION PLAN CREATION PROGRAM**

(30) Priority: 25.04.2019 JP 2019084540
(71) Applicant: Hitachi, Ltd., Tokyo 100-8280 (JP)
(72) Inventor: Tomiyama, Tomoe, Tokyo 100-8280 (JP); HANDA, Takeshi, Tokyo 100-8280 (JP); OKADA, Kenichirou, Tokyo 100-8280 (JP)
(74) Representative: Manitz Finsterwald Patent- und Rechtsanwaltspartnerschaft mbB
(86) International application number: PCT/JP2020/007339
(87) International publication number: WO 2020/217693

(57) **Abstract**

A rolling stock scheduling creation device 1 that creates scheduling of railroad rolling stock and includes: a processor 10; and a memory 20 storing data used by the processor, wherein the memory stores transportation plan information which is information on travel of a train using a rolling stock train-unit including the railroad rolling stock, rolling stock train-unit information which is information on an attribute and an inspection conducting schedule related to each rolling stock train-unit and scheduling, and inspection capacity information which is information indicating inspection capacity of an inspection facility 102 associated with the rolling stock train-unit, and the processor creates scheduling for the transportation plan information by applying the rolling stock train-unit information and selecting a train to which each rolling stock train-unit is allocatable, and obtains inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, the inspection capacity information, and the scheduling of each rolling stock train-unit.

## Description

### [Technical Field]

The present invention relates to a rolling stock scheduling creation device, a rolling stock scheduling creation method, and a rolling stock scheduling creation program.

### [Background Art]

### ---Incorporation by Reference---

This application claims priority based on Japanese Patent Application No. 2019-084540 filed on April 25, 2019, and the contents thereof are incorporated herein by reference.

Transportation companies of such as railroads, monorails, streetcars, and buses periodically conduct various inspections on own rolling stock based on a predetermined inspection cycle in order to safely transport passengers and cargoes. In a case of railroads, for example, the periodic inspection on rolling stock is usually conducted between commercial operations, and in such a case, railroad companies need to create a scheduling of rolling stock (hereinafter, also referred to as "rolling stock scheduling") while distinguishing inspection conducting days and other days. This is because, when the rolling stock scheduling for inspection conducting days is created, the allocation of the rolling stock to a train needs to be determined by taking into consideration the timing and required time for conducting the inspection and the like. Under these circumstances, railroad companies generally create the rolling stock scheduling by taking into consideration the inspection cycle.

As for a related technique to create the rolling stock scheduling taking into consideration the inspection cycle for rolling stock, for example, PTL 1 discloses a railroad rolling stock maintenance plan analysis system that includes at least: a data storage means including a passenger data storage region storing passenger load data, an operation data storage region storing operation load data, and a weather data storage region storing weather load data; a computing means converting information stored in the various data storage regions in the data storage means into predetermined corresponding values; and a management means creating a maintenance plan for rolling stock based on the corresponding values obtained by the computing means. There is described that, with this, it is possible to create a maintenance schedule that can reduce the maintenance management cost while maintaining the peace and safe and comfortable passenger transportation by reducing the damaging risk and optimizing the maintenance frequency of rolling stock.

### [Citation List]

### [Patent Literature]

[PTL 1] Japanese Patent Application Publication No. 2015-193359

### [Summary of Invention]

### [Technical Problem]

In the case of railroads, for example, the inspection on rolling stock is usually conducted in a rolling stock yard that manages the rolling stock. The amount of inspection that can be conducted in the rolling stock yard, specifically, the degree of inspection conducting capacity of the rolling stock yard, is different depending on the time period. However, in PTL 1, the inspection conducting capacity of the rolling stock yard depending on the time period is not taken into consideration. Therefore, there has been a problem in the system of PTL 1 that, for example, due to the inspection conducting capacity of the rolling stock yard, a predetermined inspection cannot be conducted on rolling stock that is planned to have the inspection, and thus it has been difficult to create rolling stock scheduling that is implementable while reliably conducting the predetermined inspection for each rolling stock.

In view of this, an object of the present invention is to provide a rolling stock scheduling creation device, a rolling stock scheduling creation method, and a rolling stock scheduling creation program that are capable of creating rolling stock scheduling that is reliably implementable while conducting a predetermined inspection on each rolling stock.

### [Solution to Problem]

An aspect of the present invention to achieve the above objective is a rolling stock scheduling creation device that creates scheduling of railroad rolling stock and is formed as a computer, comprising: a processor; and a memory storing data used by the processor, wherein the memory stores transportation plan information which is information on travel of a train using a rolling stock train-unit including the railroad rolling stock, rolling stock train-unit information which is information on an attribute and an inspection conducting schedule related to each rolling stock train-unit and scheduling, and inspection capacity information which is information indicating inspection capacity of an inspection facility associated with the rolling stock train-unit, and the processor creates scheduling for the transportation plan information by applying the rolling stock train-unit information and selecting a train to which each rolling stock train-unit is allocatable, and obtains inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, the inspection capacity information, and the scheduling of each rolling stock train-unit.

Another aspect of the present invention is a rolling stock scheduling creation method of creating scheduling of railroad rolling stock in which a computer includes a processor and a memory storing data used by the processor, comprising: creating scheduling for transportation plan information which is information on travel of a train using a rolling stock train-unit including the railroad rolling stock by applying rolling stock train-unit information which is information on an attribute and an inspection conducting schedule related to each rolling stock train-unit and scheduling and selecting a train to which each rolling stock train-unit is allocatable; and obtaining inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, inspection capacity information which is information indicating inspection capacity of an inspection facility associated with the rolling stock train-unit, and scheduling of each rolling stock train-unit.

Another further aspect of the invention is a rolling stock scheduling creation program for creating scheduling of railroad rolling stock, the program causing a computer including a processor and a memory storing data used by the processor to fulfill functions of: creating scheduling for transportation plan information which is information on travel of a train using a rolling stock train-unit including the railroad rolling stock by applying rolling stock train-unit information which is information on an attribute and an inspection conducting schedule related to each rolling stock train-unit and scheduling and selecting a train to which each rolling stock train-unit is allocatable, and obtaining inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, inspection capacity information which is information indicating inspection capacity of an inspection facility associated with the rolling stock train-unit, and scheduling of each rolling stock train-unit.

Additionally, a problem and a method of solving the problem disclosed in this application become apparent by the section of Descriptions of Embodiments and the drawings.

### [Advantageous Effects of Invention]

According to the present invention, there are provided a rolling stock scheduling creation device, a rolling stock scheduling creation method, and a rolling stock scheduling creation program that are capable of creating rolling stock scheduling that is reliably implementable while conducting a predetermined inspection on each rolling stock.

### [Brief Description of Drawings]

[Fig. 1] Fig. 1 is a diagram illustrating a hardware configuration example of a rolling stock scheduling creation device.
[Fig. 2] Fig. 2 is a diagram illustrating a functional block example of the rolling stock scheduling creation device.
[Fig. 3] Fig. 3 is a diagram illustrating a data structure example of transportation plan information data.
[Fig. 4] Fig. 4 is a diagram illustrating a data structure example of rolling stock train-unit information data.
[Fig. 5] Fig. 5 is a diagram illustrating a data structure example of inspector information data.
[Fig. 6] Fig. 6 is a diagram illustrating a data structure example of inspection track information data.
[Fig. 7] Fig. 7 is a diagram illustrating a data structure example of inspection type information data.
[Fig. 8] Fig. 8 is a flowchart indicating an example of rolling stock scheduling creation processing.
[Fig. 9] Fig. 9 is a flowchart indicating an example of rolling stock operation network model creation processing (S802) indicated in Fig. 8.
[Fig. 10] Fig. 10 is a schematic diagram describing a method of categorizing inspection slots.
[Fig. 11] Fig. 11 is a flowchart indicating an example of node and link adding processing (S904) indicated in Fig. 9.
[Fig. 12] Fig. 12 is a diagram indicating a state of creating a rolling stock operation network model at a time point at which transportation plan network model creation processing (S901) indicated in Fig. 9 is terminated.
[Fig. 13] Fig. 13 is a diagram indicating a state of creating the rolling stock operation network model at a time point at which inspection slot node adding processing (S1102) indicated in Fig. 11 is terminated.
[Fig. 14] Fig. 14 is a diagram indicating a state of creating the rolling stock operation network model at a time point at which inspection track node adding processing (S1103) indicated in Fig. 11 is terminated.
[Fig. 15] Fig. 15 is a diagram indicating a state of creating the rolling stock operation network model at a time point at which link adding processing (S1104) indicated in Fig. 11 is terminated.
[Fig. 16] Fig. 16 is a diagram illustrating a configuration example of a screen displaying rolling stock scheduling.

### [Description of Embodiments]

Hereinafter, an embodiment of the present invention is described in detail with reference to the accompanying drawings.

### ---Conventional Rolling Stock Scheduling Creation Method---

These days, a method of creating a network type data model (hereinafter, also referred to as a "network model") representing rolling stock scheduling by a tree structure and determining scheduling of the rolling stock based on the network model is generally used. For example, a research paper by Keisuke Sato et al. (2003) below, which is Keisuke Sato and Naoto Fukumura, "Freight Train Locomotive Rescheduling Problem after Disruptions," Transactions on Mathematical Modeling and its Applications 2, no. 3, (2003): 97-109, discloses a technique to take into consideration an inspection cycle for the rolling stock in a method of determining rolling stock scheduling based on a network model. In this technique, schematically, first, pieces of information indicating rolling stock (train) for which the scheduling is created, a train that travels in a designated period, an inspection conducted in the period, and the like are arranged as individual nodes on a network model. These nodes include temporal information and locational information. Next, based on the temporal information and locational information included in the individual nodes, two nodes that can be coupled to each other are coupled by a link (edge), and then an evaluation value of each link is calculated. Then, the links are sorted out based on the evaluation values, and a single path that passes through predetermined nodes once is extracted as rolling stock scheduling in the period. Consequently, even when it is required to conduct the inspection within the period on the rolling stock for which the rolling stock scheduling is created, it is possible to reliably deadhead the rolling stock to a rolling stock yard on the inspection conducting day. Hereinafter, the embodiment of the present invention is described based on the above-described network model; however, needless to say, the embodiment of the present invention is not limited thereto.

### ---Rolling Stock Scheduling Creation Device---

### <Hardware Configuration Example of Rolling Stock Scheduling Creation Device>

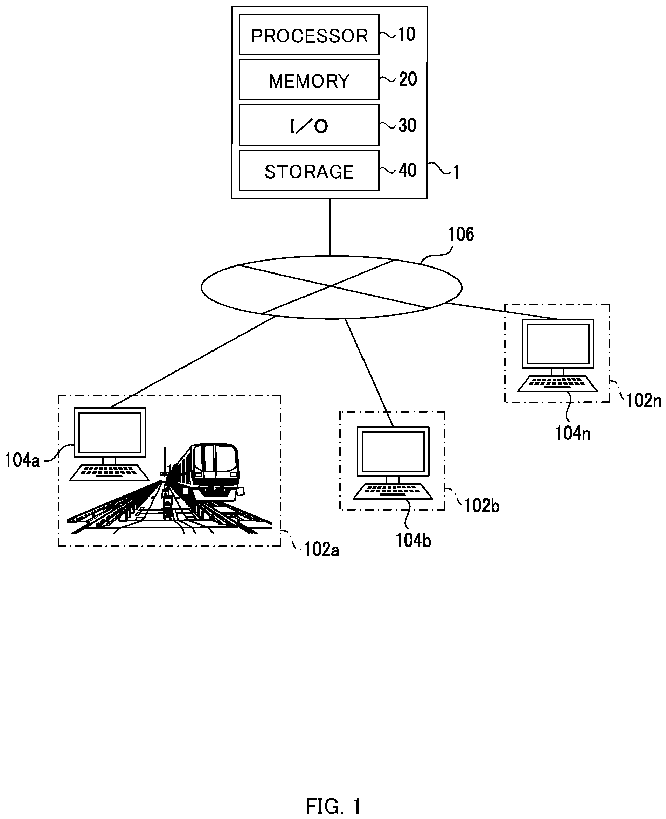

First, a physical configuration of a rolling stock scheduling creation device is described. Fig. 1 schematically illustrates a hardware configuration example of a rolling stock scheduling creation device 1. As illustrated in Fig. 1, the rolling stock scheduling creation device 1 is provided outside a rolling stock yard 102 indicated by a dashed-dotted line and is coupled with data terminal devices (data terminal equipment; DTE) 104a, 104b...104n (hereinafter, collectively referred to as a "data terminal device 104" when collectively calling and not particularly distinguishing) respectively provided inside rolling stock yards 102a, 102b...102n (hereinafter, collectively referred to as a "rolling stock yard 102" when collectively calling and not particularly distinguishing) through a communication network 106 such as the Internet and a dedicated line. A mobile device (not illustrated) such as a smartphone and a tablet owned by each inspector may be coupled to the rolling stock scheduling creation device 1 through the communication network 106. The rolling stock scheduling creation device 1 in this embodiment is assumed as a server device including one or more general-purpose servers. The rolling stock scheduling creation device 1 may be a general-purpose computer such as a laptop PC or may have a configuration including a mobile device. The rolling stock scheduling creation device 1 and the communication network 106 are coupled with each other by wire through a publicly known communication device (not illustrated); however, they may be coupled with each other wirelessly.

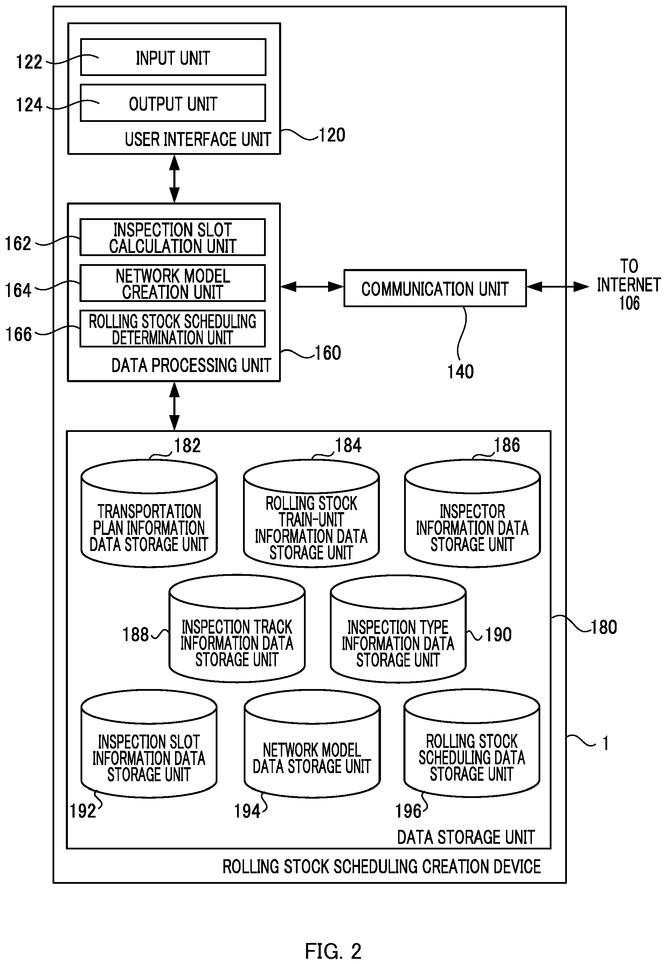

Next, a functional configuration of the rolling stock scheduling creation device 1 is described. Fig. 2 illustrates an example of functional blocks of the rolling stock scheduling creation device 1. As exemplified in Fig. 1 described above, constituents of the rolling stock scheduling creation device 1 are implemented by a computing unit 10 such as a CPU (central processing unit) and various coprocessors, a memory 20, a storage 40 such as a hard disk drive (HDD) and a semiconductor drive (SSD), an input and output device 30 for inputting and outputting data, hardware including a wired or wireless communication line connecting the elements, and software stored in the storage 40 and supplying a processing command to the computing unit 10. Computer programs may include a device driver, an operating system, various application programs located in a layer higher than the device driver and the operating system, and a library providing a function common to these programs. Each block described below does not indicate a configuration by the hardware unit but a block by the function unit.

The rolling stock scheduling creation device 1 may have a configuration including a general-purpose computer such as a laptop PC and a web browser installed therein or may have a configuration including a web server.

### <Functional Block Example of Rolling Stock Scheduling Creation Device>

As illustrated in Fig. 2, the rolling stock scheduling creation device 1 includes a user interface unit 120, a communication unit 140, a data processing unit 160, and a data storage unit 180.

The user interface unit 120 accepts an operation from an operator through a touch screen and is in charge of processing related to a user interface such as image display and sound output. The communication unit 140 is in charge of communication processing with the data terminal device 104 and the mobile device owned by each inspector through the communication network 106. The data storage unit 180 stores various data. The data processing unit 160 executes various types of processing based on data obtained by the user interface unit 120 and the communication unit 140 and data stored in the data storage unit 180. The data processing unit 160 functions also as an interface for the user interface unit 120, the communication unit 140, and the data storage unit 180.

The data processing unit 160 includes an inspection slot calculation unit 162, a network model creation unit 164, and a rolling stock scheduling determination unit 166.

The inspection slot calculation unit 162 calculates the number of slots (hereinafter, also referred to as "inspection slots") in which an inspection can be conducted in the rolling stock yard 102 in a predetermined time period based on information (details are described later) indicating a shift of an inspector stored in an inspector information data storage unit 186 and information (details are described later) indicating the number of inspection tracks held by each rolling stock yard 102 and the like that is stored in an inspection track information data storage unit 188. The network model creation unit 164 creates a network type data model (rolling stock scheduling data model; hereinafter, also referred to as a "rolling stock operation network model") representing scheduling of rolling stock by a tree structure by using the inspection slot information data calculated by the inspection slot calculation unit 162. The rolling stock scheduling determination unit 166 determines rolling stock scheduling of each rolling stock train-unit based on the rolling stock operation network model created by the network model creation unit 164.

The communication unit 140 obtains various types of information on the inspection from the data terminal device 104 of each rolling stock yard 102 and the mobile device of each inspector, and the data processing unit 160 causes the user interface unit 120 to display the scheduling information of each rolling stock.

The data storage unit 180 includes a transportation plan information data storage unit 182, a rolling stock train-unit information data storage unit 184, the inspector information data storage unit 186, the inspection track information data storage unit 188, an inspection type information data storage unit 190, an inspection slot information data storage unit 192, a network model data storage unit 194, and a rolling stock scheduling data storage unit 196.

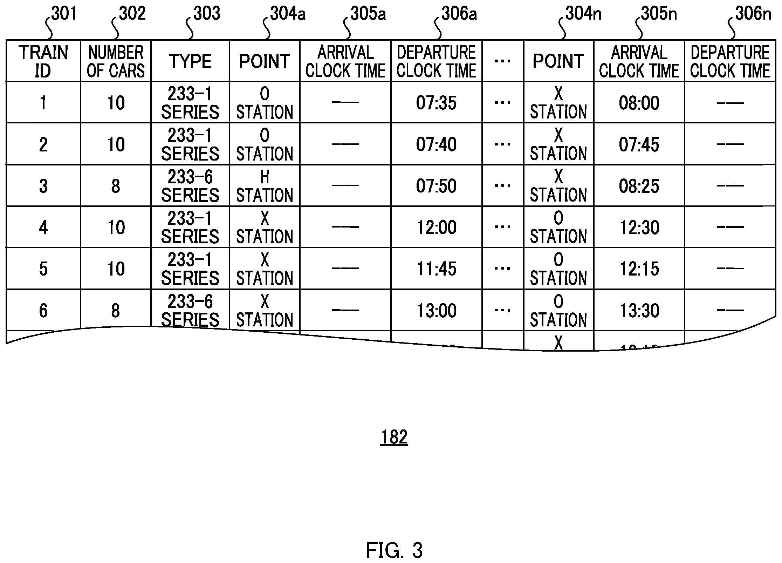

The transportation plan information data storage unit 182 stores data (hereinafter, also referred to as "transportation plan information data") indicating information (transportation plan information) on a transportation plan created for each train. The transportation plan is a plan defining a transportation service for transporting passengers or cargoes. An example of a data structure of the transportation plan information data is indicated in Fig. 3. As indicated in Fig. 3, for each train, the transportation plan information data storage unit 182 stores data indicating a train ID 301 for uniquely identifying each train, the number of cars 302 in a rolling stock train-unit allocated to the train, a rolling stock type 303 of the rolling stock allocated to the train, clock times (305a, 305b...305n) at which the train arrives at corresponding stations 304a, 304b...304n (hereinafter, collectively referred to as a "station 304" when collectively calling and not particularly distinguishing), and clock times (306a, 306b...306n) at which the train departs from each station 304. For example, a "train 1" indicated in Fig. 3 is a train to which 233-1 series rolling stock of a train-unit of 10 cars is allocated and that departs from an O station as the starting station at 7:35 and arrives at an X station as the terminal station at 8:00.

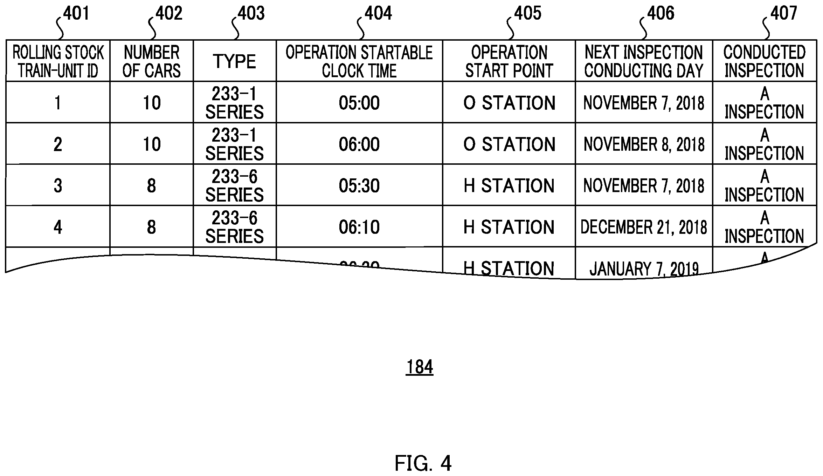

The rolling stock train-unit information data storage unit 184 stores data (hereinafter, also referred to as "rolling stock train-unit information data") indicating information on a rolling stock train-unit (rolling stock train-unit information). An example of a data structure of the rolling stock train-unit information data is indicated in Fig. 4. As indicated in Fig. 4, for each rolling stock train-unit, the rolling stock train-unit information data storage unit 184 stores not only data indicating a rolling stock train-unit ID 401 for uniquely identifying each rolling stock train-unit, the number of cars 402 in the rolling stock train-unit, a rolling stock type 403 of the rolling stock included in the rolling stock train-unit, an operation startable clock time 404 indicating a clock time at which an operation of the rolling stock train-unit can be started, and an operation beginning point 405 of the rolling stock train-unit, but also data (inspection conducting schedule information) indicating a next inspection conducting day 406 of the rolling stock train-unit and a conducted inspection 407 conducted on the rolling stock train-unit. For example, a "rolling stock train-unit 1" indicated in Fig. 4 is a rolling stock train-unit including 233-1 series rolling stock of 10 cars, which is a rolling stock train-unit that can start an operation at the O station at 5:00 and conducts a next A inspection on November 7, 2018. The data indicating the operation beginning point 405 of the rolling stock train-unit is set based on a location in which the operation of the rolling stock train-unit is terminated the day before. The data indicating the next inspection conducting day 406 of the rolling stock train-unit is obtained from another server device through the communication network 106.

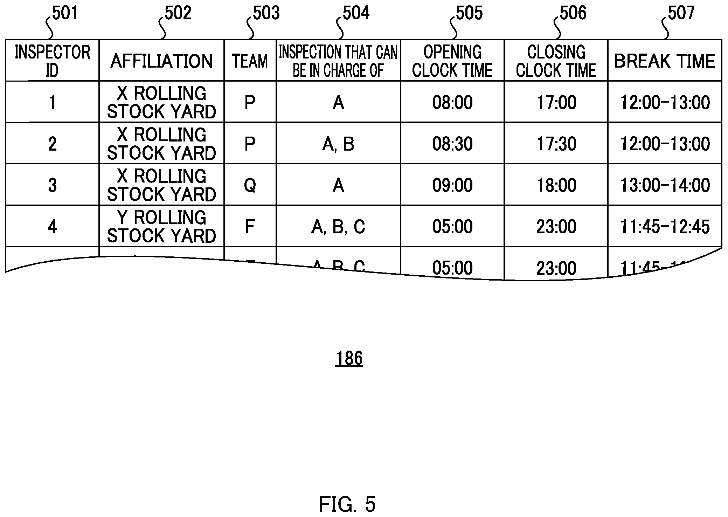

The inspector information data storage unit 186 stores data (hereinafter, also referred to as "inspector information data") indicating information (inspector information) on the skill and shift of the inspector assigned to each rolling stock yard 102. An example of a data structure of the inspector information data is indicated in Fig. 5. As indicated in Fig. 5, for each inspector, the inspector information data storage unit 186 stores not only data indicating an inspector ID 501 for uniquely identifying each inspector, a name 502 of a rolling stock yard to which the inspector is assigned, an inspection team 503 to which the inspector is assigned, and an inspection type 504 that the inspector can be in charge of, but also data indicating the shift of the day of the inspector such as an opening clock time 505, a closing clock time 506, and break time 507. For example, an "inspector 1" indicated in Fig. 5 is an inspector who is assigned to a P team in an X rolling stock yard and who can be in charge of the A inspection and is an inspector who starts working at 8:00, has a break from 12:00 to 13:00, and finishes working at 17:00 on the day.

The inspector information can be directly inputted by the operator to the rolling stock scheduling creation device 1 through an input unit 122. The rolling stock scheduling creation device 1 may receive the inspector information data from the data terminal device 104 in each rolling stock yard 102 and the mobile device owned by the inspector through the communication unit 140. In this case, the inspector inputs the above-described various types of information to the data terminal device 104 and an input unit of the mobile device (not illustrated) and transmits the information to the rolling stock scheduling creation device 1 through the communication network 106, for example.

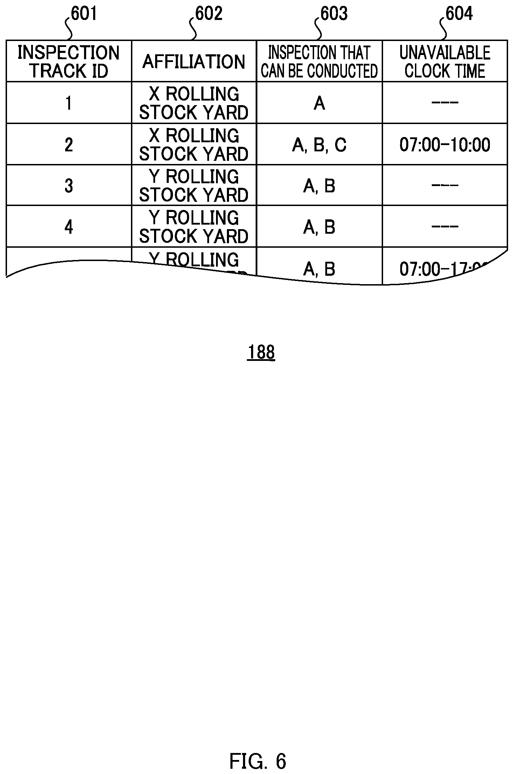

The inspection track information data storage unit 188 stores data (hereinafter, also referred to as "inspection track information data") indicating information (inspection track information) on an inspection track such as the number of inspection tracks held by each rolling stock yard 102 and whether each inspection track is available in each time period. An example of a data structure of the inspection track information data is indicated in Fig. 6. As indicated in Fig. 6, for each inspection track, the inspection track information data storage unit 188 stores data indicating an inspection track ID 601 for uniquely identifying each inspection track, a name 602 of a rolling stock yard in which the inspection track is provided, a type 603 of an inspection that can be conducted in the inspection track, and a clock time 604 at which the inspection track is unavailable because of circumstances such as maintenance. For example, an "inspection track 1" indicated in Fig. 6 is an inspection track provided in the X rolling stock yard and is an inspection track in which the A inspection can be conducted, which is available all day on the day.

The above-described inspector information and inspection track information are collectively referred to as inspection capacity information.

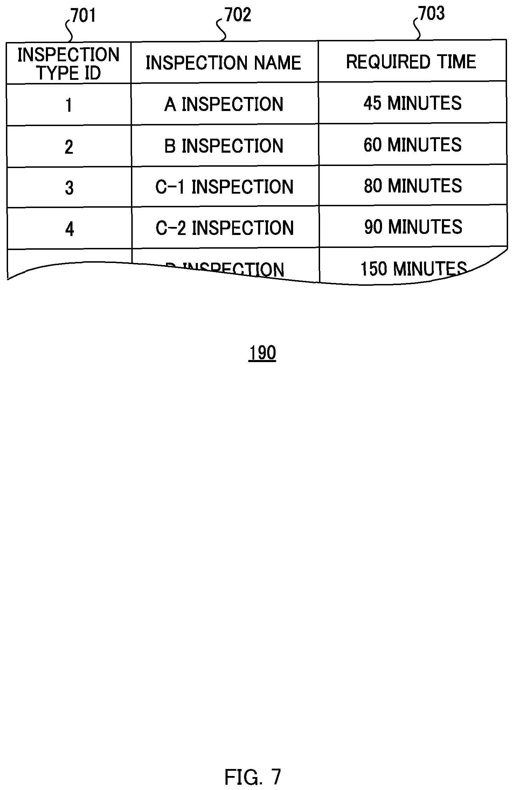

The inspection type information data storage unit 190 stores data (hereinafter, also referred to as "inspection type information data") indicating a type of the inspection conducted in the rolling stock yard 102. An example of a data structure of the inspection type information data is indicated in Fig. 7. As indicated in Fig. 7, for each inspection type, the inspection type information data storage unit 190 stores data indicating an inspection type ID 701 for uniquely identifying various inspections, a name 702 of the inspection, and a required time 703 for the inspection. For example, an "inspection type 1" indicated in Fig. 7 is an inspection that is called the A inspection and that requires 45 minutes from the beginning to the end.

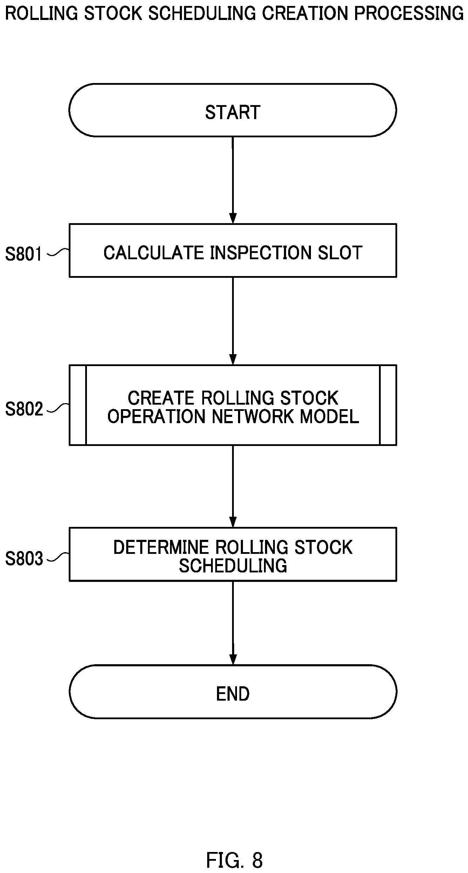

The data storage unit 180 includes not only the above-described various data storage units (182, 184, 186, 188, 190), but also the inspection slot data storage unit 192, the network model data storage unit 194, and the rolling stock scheduling data storage unit 196. For each rolling stock yard 102, the inspection slot data storage unit 192 stores data (hereinafter, also referred to as "inspection slot data") indicating the number of the inspection slots that is calculated by the inspection slot calculation unit 162. For each rolling stock train-unit, the network model data storage unit 194 stores data (hereinafter, also referred to as "network model data") indicating the rolling stock operation network model created by the network model creation unit 164. For each rolling stock train-unit, the rolling stock scheduling data storage unit 196 stores the rolling stock scheduling data created by the rolling stock scheduling determination unit 166. Generation processes of the inspection slot data, the network model data, and the rolling stock scheduling information data are described below with reference to Figs. 8 to 16.

The user interface unit 120 includes the input unit 122 accepting an input from the operator and an output unit 124 outputting various types of information such as an image and sound to the operator. The input unit 122 mainly detects a touch operation by the operator to the screen.

In the above descriptions, the functions of the rolling stock scheduling creation device 1 are described as being implemented integrally by a single device; however, these functions may be implemented by multiple devices or servers that are coupled to each other.

### <Creation Process of Rolling Stock Scheduling>

A process of creating rolling stock scheduling by the above-described rolling stock scheduling creation device 1 is described below.

### ---Creation Example---

Here, first, a process of creating rolling stock scheduling on Wednesday, November 7, 2018 for three rolling stock train-units, which are the "rolling stock train-unit 1", a "rolling stock train-unit 2", and a "rolling stock train-unit 3", by the rolling stock scheduling creation device 1 is described mainly on the time period from 7:00 to 13:00 with reference to Figs. 8 to 16. In the descriptions below, various data indicated in Figs. 3 to 7 are described as indicating information on the same day unless the date is stated otherwise.

As indicated in Fig. 4, the day is the inspection conducting day of the "rolling stock train-unit 1", and the "rolling stock train-unit 3". In this case, the rolling stock scheduling creation device 1 creates rolling stock scheduling including an inspection plan for these rolling stock train-units.

On the other hand, as indicated in Fig. 4, the day is not the inspection conducting day of the "rolling stock train-unit 2". Therefore, the rolling stock scheduling creation device 1 creates rolling stock scheduling including only a transportation plan for the "rolling stock train-unit 2".

### <Rolling Stock Scheduling Creation Processing>

The rolling stock scheduling creation device 1 performs rolling stock scheduling creation processing indicated in Fig. 8 to create the rolling stock scheduling of the "rolling stock train-unit 1", the "rolling stock train-unit 2", and the "rolling stock train-unit 3". To be specific, first, based on the data related to the shift of the inspector stored in the inspector information data storage unit 186 and the data indicating the required time for various inspections stored in the inspection type information data storage unit 190, the inspection slot calculation unit 162 calculates an inspection slot that can be set in the same time period in the X rolling stock yard in which the inspections on the "rolling stock train-unit 1", the "rolling stock train-unit 2", and the "rolling stock train-unit 3" are conducted (S801).

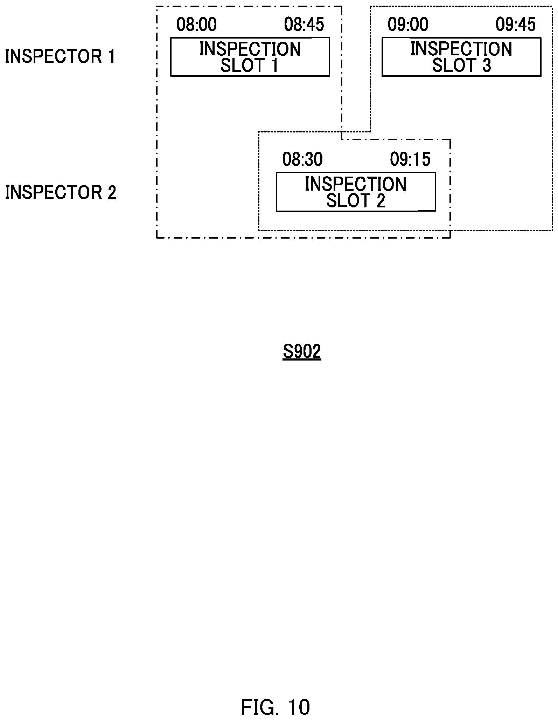

Only one inspection can be conducted in one inspection slot. The length of the inspection slot is determined depending on the required time for the inspection conducted. Therefore, the inspection slot calculation unit 162 calculates the number of the inspection slots that can be set in a predetermined time period by dividing working hours of the inspector in the time period by the required time for the inspection conducted and omitting figures after the decimal point. An example of the inspection slot calculated by the inspection slot calculation unit 162 is indicated in Fig. 10. The inspection slot may be defined by adding predetermined padding or by reading data that is set for each inspector in advance. As indicated in Fig. 10, the following descriptions are given assuming that the inspections conducted on the "rolling stock train-unit 1" and the "rolling stock train-unit 3" on the day are both the A inspection that requires 45 minutes, and the inspection slot calculation unit 162 calculates an "inspection slot 1" and an "inspection slot 3" for an inspector A who starts working at 8:00 and calculates an "inspection slot 2" for an inspector B who starts working at 8:30.

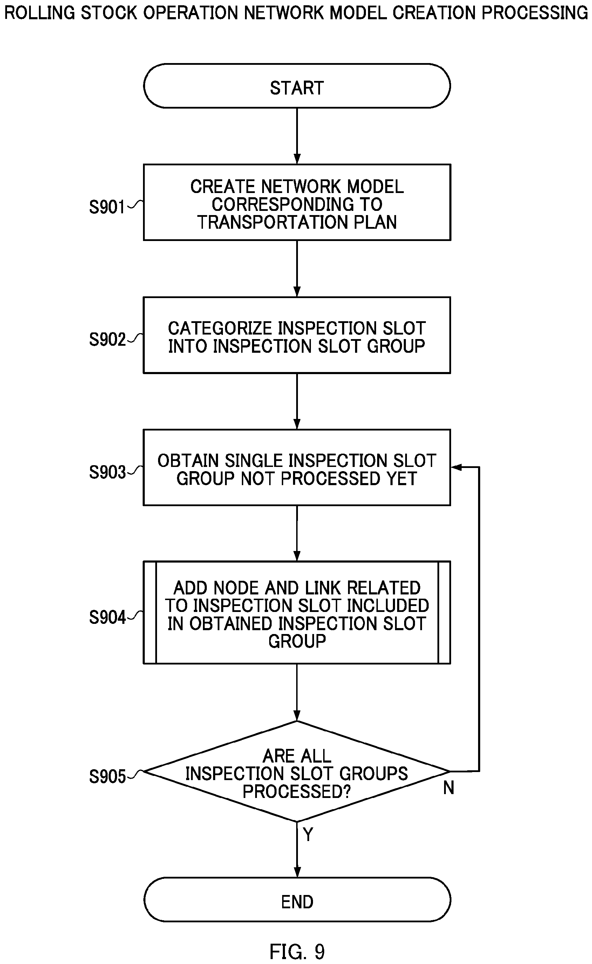

Next, the network model creation unit 164 creates the rolling stock operation network model (S802) and transmits the rolling stock operation network model to the rolling stock scheduling determination unit 166. Details of the rolling stock operation network model creation processing are described later with reference to Fig. 9.

Thereafter, the rolling stock scheduling determination unit 166 determines the rolling stock scheduling based on the rolling stock operation network model received from the network model creation unit 164 (S803).

### <Network Model Creation Processing>

The network model creation unit 164 creates a network model corresponding to a transportation plan (S901). The trains stored in the transportation plan information data storage unit 182 and the rolling stock train-units stored in the rolling stock train-unit information data storage unit 184 are used as nodes, respectively, and the network model is created by coupling the nodes that have consistency in place and time by a link. In the following descriptions, a node indicating the train may be referred to as a "train node", and a node indicating the rolling stock train-unit may be referred to as a "rolling stock train-unit node".

In the network model creation processing (S901) indicated in Fig. 9, the link that couples two nodes with each other is generated when the following conditions are satisfied between the rolling stock train-unit node and the train node or between the train nodes.

First, when the operation beginning point of the rolling stock train-unit indicated by the rolling stock train-unit node and the starting point of the train indicated by the train node are the same, and a first departure clock time of the train is at or after the operation startable clock time of the rolling stock train-unit, the network model creation unit 164 generates the link that couples the rolling stock train-unit node and the train node with each other.

When the terminal point of one train node (hereinafter, also referred to as a "train node A") and the starting point of the other train node (hereinafter, also referred to as a "train node B") are the same, and a first departure clock time of the train node B is at or after a clock time obtained by adding predetermined padding to a last arrival clock time of the train node A, the network model creation unit 164 generates the link that couples the train node A and the train node B with each other.

The starting point of each train indicated by the train node is defined by, unless specified otherwise, information indicating a first point out of the information indicating multiple points contained in corresponding data of the trains stored in the transportation plan information data storage unit 182. Similarly, the terminal point of each train is defined by, unless specified otherwise, information indicating a last point out of the information indicating multiple points contained in corresponding data of the trains stored in the transportation plan information data storage unit 182. For example, the starting point of the train node indicating the "train 1" in Fig. 3 is an "O station", and the terminal point thereof is an "X station".

The first departure clock time of each train indicated by the train node is defined by, unless specified otherwise, information indicating the earliest departure clock time out of multiple pieces of information indicating departure clock times contained in corresponding data of the trains stored in the transportation plan information data storage unit 182. Similarly, the last arrival clock time of each train is defined by, unless specified otherwise, information indicating the latest arrival clock time out of multiple pieces of information indicating arrival clock times contained in corresponding data of the trains stored in a transportation plan information data storage unit 182. For example, the first departure clock time of the train node indicating the "train 1" in Fig. 3 is "7:35", and the last arrival clock time thereof is "8:00".

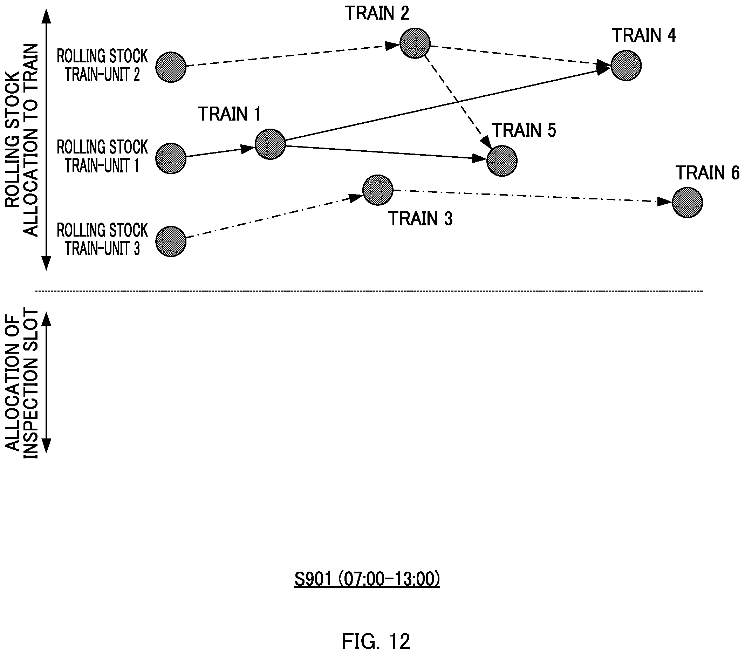

An example of the network model created in this case is indicated in Fig. 12. When the network model is illustrated as a reference drawing in the following descriptions, the descriptions are given assuming that the rolling stock train-unit node and the train node, which are constituents of the network model corresponding to the transportation plan, and the link that couples the rolling stock train-unit node and the train node with each other are arranged in a region (hereinafter, also referred to as an "upper region") on an upper side of a dotted line horizontally across the center of the screen, while an inspection slot node and an inspection track node and the link that couples the inspection slot node and the inspection track node with each other are arranged in a region (hereinafter, also referred to as "lower region") on a lower side of the dotted line. Specifically, the upper region of the network model displays the rolling stock allocation to the trains, and the lower region thereof displays the allocation of the inspection slots, respectively.

As indicated in Fig. 12, it is possible to allocate the "train 1" to start operating the "rolling stock train-unit 1", the "train 2" to start operating the "rolling stock train-unit 2", and the "train 3" to start operating the "rolling stock train-unit 3", respectively. The "train 1", the "train 2", and the "train 3" indicated in Fig. 12 are all the trains that arrive at the X station as the terminal station in the same time period, while a "train 4", a "train 5", and a "train 6" are trains that depart from the X station as the starting station in the same time period. Among the above, the "rolling stock train-unit 1" allocated to the "train 1" and the "rolling stock train-unit 2" allocated to the "train 2" both include 233-1 series rolling stock of 10 cars, and then the "rolling stock train-unit 1" and the "rolling stock train-unit 2" are allocatable to either of the "train 4" and the "train 5", which depart from the X station after a clock time obtained by adding predetermined padding to the last arrival clock time of the "train 1" and the "train 2" and can depart from the X station again. The "rolling stock train-unit 3" allocated to the "train 3" includes 233-6 series rolling stock of eight cars, and then the "rolling stock train-unit 3" is allocatable to the "train 6", which departs from the X station after a clock time obtained by adding predetermined padding to the last arrival clock time of the "train 3" and can depart from the X station again.

Therefore, in the network model indicated in Fig. 12, the link that couples the node indicating the "rolling stock train-unit 1" and the node indicating the "train 1" with each other and the links that couple the node indicating the "train 1" and each of the nodes indicating the "train 4" and the "train 5" with each other are set by the network model creation unit 164 as indicated by solid lines in Fig. 12, respectively. Similarly, the link that couples the node indicating the "rolling stock train-unit 2" and the node indicating the "train 2" with each other and the links that couple the node indicating the "train 2" and each of the nodes indicating the "train 4" and the "train 5" with each other are set by the network model creation unit 164 as indicated by broken lines in Fig. 12, respectively, and the link that couples the node indicating the "rolling stock train-unit 3" and the node indicating the "train 3" with each other and the link that couples the node indicating the "train 3" and the node indicating the "train 6" with each other are set by the network model creation unit 164 as indicated by dashed-dotted lines in Fig. 12, respectively.

Next, based on the data indicating the inspection slot received from the inspection slot calculation unit 162, the network model creation unit 164 groups some of two or more inspection slots set for different inspectors that have overlapped set times into the same inspection slot group (S902).

Here, a method of categorizing the inspection slot is described with reference to Fig. 10. As indicated in Fig. 10, the "inspection slot 1" started at 8:00 and terminated at 8:45 and the "inspection slot 3" started at 9:00 and terminated at 9:45 are set for the "inspector 1". On the other hand, as indicated in Fig. 10, the "inspection slot 2" started at 8:30 and terminated at 9:15 is set for the "inspector 2". Among these three inspection slots, since a part of the set time of the "inspection slot 1" set for the "inspector 1" and that of the "inspection slot 2" set for the "inspector 2" are overlapped with each other, the "inspection slot 1" and the "inspection slot 2" are categorized in the same inspection slot group as indicated by a dashed-dotted line in Fig. 10. Similarly, since a part of the set time of the "inspection slot 3" set for the "inspector 1" and that of the "inspection slot 2" set for the "inspector 2" are overlapped with each other as well, the "inspection slot 3" and the "inspection slot 2" are categorized in the same inspection slot group as indicated by a broken line in Fig. 10. Specifically, as indicated in Fig. 10, the "inspection slot 1", the "inspection slot 2", and the "inspection slot 3" are categorized into an "inspection slot group 1" including the "inspection slot 1" and the "inspection slot 2" and an "inspection slot group 2" including the "inspection slot 2" and the "inspection slot 3". With the grouping of the inspection slots having the overlapped set times into the same inspection slot group, it is possible to create the rolling stock scheduling by taking into full consideration the inspection conducting capacity of the rolling stock yard 102 at each clock time.

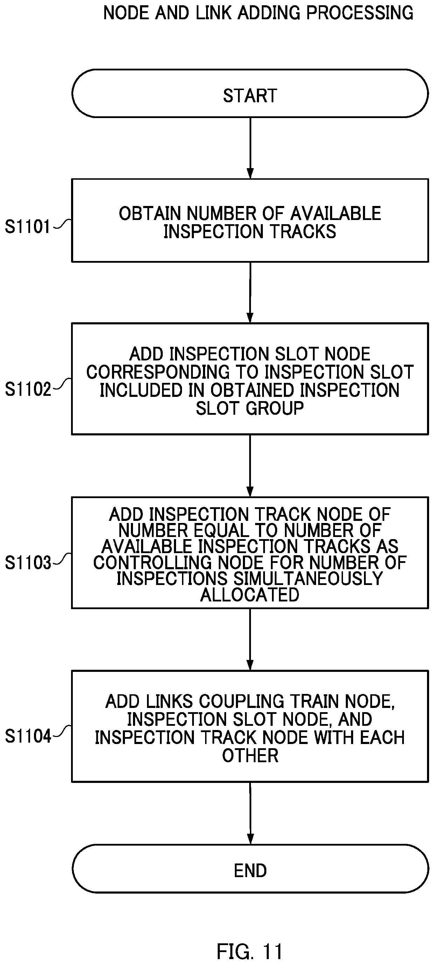

Thereafter, the network model creation unit 164 obtains one inspection slot group out of all the inspection slot groups (S903) and performs processing (hereinafter, also referred to as "node and link adding processing") of adding the nodes and links related to the inspection slots included in the obtained inspection slot group to the rolling stock operation network model (S904). Details of the node and link adding processing (S904) are described below with reference to Fig. 11.

Once the node and link adding processing (S904) is terminated, the network model creation unit 164 determines whether the node and link adding processing for all the inspection slot groups is completed (S904).

When the node and link adding processing for all the inspection slot groups is not completed (S905: NO), the network model creation unit 164 obtains one inspection slot group out of the inspection slot groups on which the node and link adding processing is not performed (S903).

When the node and link adding processing for all the inspection slot groups is completed (S905: YES), the network model creation unit 164 terminates the rolling stock operation network model creation processing indicated in Fig. 9 and transmits the data indicating the created rolling stock operation network model to the rolling stock scheduling determination unit 166.

### <Node and Link Adding Processing>

Details of the node and link adding processing (S904) indicated in Fig. 9 are described with reference to Fig. 11. In this case, the descriptions are given assuming that the "inspection slot group 1" including the "inspection slot 1" and the "inspection slot 2" is obtained.

First, based on the data related to the inspection track stored in the inspection track information data storage unit 188, the network model creation unit 164 obtains the number of the inspection tracks available in a time period from 8:00 to 9:15 in which the "inspection slot group 1" is set (S1101). As indicated in Fig. 6, the X rolling stock yard holds the two inspection tracks, which are the "inspection track 1" and the "inspection track 2". However, the inspection track that is available in the time period is the "inspection track 1" only. Accordingly, the number of the available inspection track calculated by the network model creation unit 164 in this case is "1".

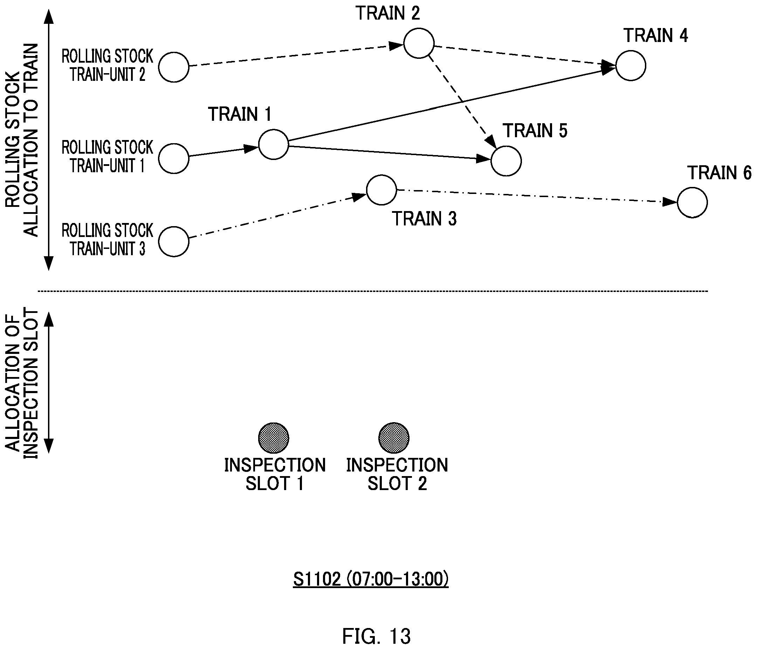

Next, as indicated in Fig. 13, the network model data storage unit 194 adds two inspection slot nodes corresponding to the "inspection slot 1" and the "inspection slot 2" included in the obtained "inspection slot group 1" and "inspection slot group 2" to the rolling stock operation network model (S1102).

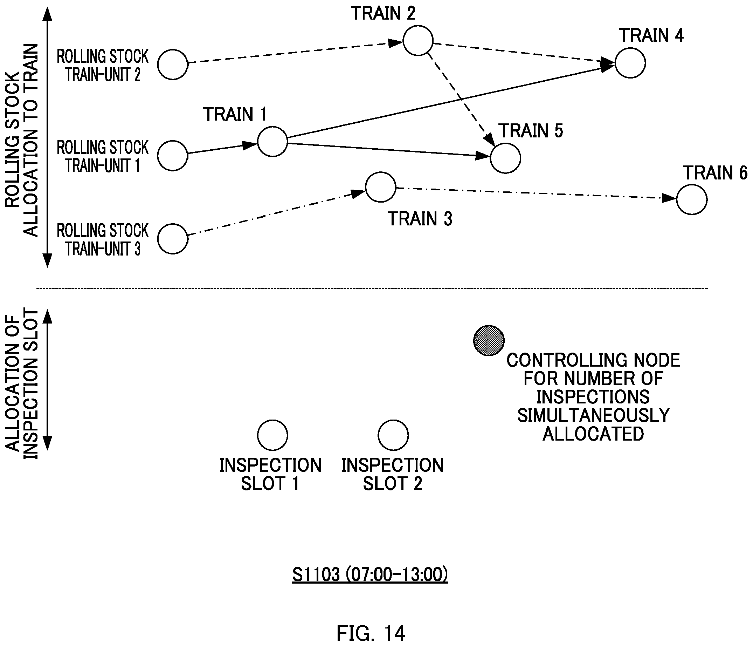

Additionally, the network model creation unit 164 adds a single inspection track node that is equal to the number of the available inspection track to the rolling stock operation network model as a node (hereinafter, also referred to as a "controlling node for the number of inspections simultaneously allocated") for controlling the number of the inspections simultaneously allocated (S1103). As indicated in Fig. 14, in this case, a single controlling node for the number of inspections simultaneously allocated is added to the rolling stock operation network model.

The network model creation unit 164 then determines whether the rolling stock train-units that have the inspection conducting day on the day each satisfy the following conditions, and when the following conditions are satisfied, links that couple the train nodes, the inspection slot nodes, and the controlling nodes for the number of inspections simultaneously allocated with each other are added to the rolling stock operation network model (S1104).

First, when the inspection conducted for the rolling stock train-unit indicated by the rolling stock train-unit node is the same as the inspection that the inspector corresponding to the inspection slot indicated by the inspection slot node can be in charge of, and the inspection start clock time of the inspection slot indicated by the inspection slot node is at or after the last arrival clock time indicated by the train node, the network model creation unit 164 generates a link that couples the train node and the inspection slot node with each other.

When the inspection that the inspector corresponding to the inspection slot indicated by the inspection slot node can be in charge of is the same as the inspection that can be conducted in the inspection track that is referred during the generation of the controlling node for the number of inspections simultaneously allocated, and the controlling node for the number of inspections simultaneously allocated is the node added in S1103, the network model creation unit 164 generates a link that couples the inspection slot node and the controlling node for the number of inspections simultaneously allocated with each other.

Additionally, when the first departure clock time of the train indicated by the train node is at or after the latest clock time out of the inspection termination clock times of the inspection slots indicated by the inspection slot nodes coupled to the controlling node for the number of inspections simultaneously allocated, the network model creation unit 164 generates a link that couples the controlling node for the number of inspections simultaneously allocated and the train node with each other.

Once the node and link adding processing (S1104) is terminated, the network model creation unit 164 determines whether the processing is performed on all the inspection slot groups categorized in S902 (S904). In this case, since the "inspection slot group 2" including the "inspection slot 2" and the "inspection slot 3" is not processed yet (S905: NO), the network model creation unit 164 obtains the "inspection slot group 2" on which the node and link adding processing is not performed (S903) and performs the node and link adding processing again (S904). Consequently, an inspection slot node corresponding to the "inspection slot 3" that is not added to the rolling stock operation network model at this point is newly added to the rolling stock operation network model (S1102).

Based on the data related to the inspection track stored in the inspection track information data storage unit 188, the network model creation unit 164 obtains the number of the inspection tracks available in a time period from 8:30 to 9:45 in which the "inspection slot group 2" is set (S1101) and adds inspection track nodes of the number equal to the obtained number of the inspection tracks to the rolling stock operation network model as the controlling nodes for the number of inspections simultaneously allocated (S1103). As indicated in Fig. 6, since the inspection track available in this time period is the "inspection track 1" only as well, in this case, a single controlling node for the number of inspections simultaneously allocated is newly added.

The network model creation unit 164 then adds links that can be generated between the newly added inspection slot node and controlling node for the number of inspections simultaneously allocated, the train nodes already existing on the rolling stock operation network model, the inspection slot nodes, and the controlling nodes for the number of inspections simultaneously allocated (S1104).

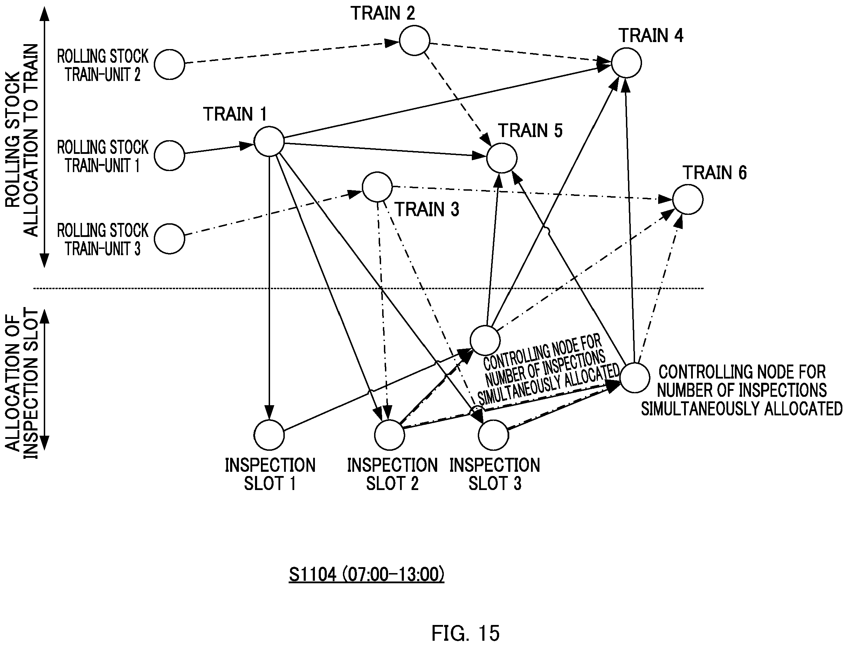

Fig. 15 indicates an example of the rolling stock operation network model for the same time period where the above-described nodes and links are added by the network model creation unit 164. As indicated in the upper region in Fig. 15, the three rolling stock train-unit nodes indicating the "rolling stock train-unit 1", the "rolling stock train-unit 2", and the "rolling stock train-unit 3" and the six train nodes indicating the "train 1", the "train 2", the "train 3", the "train 4", the "train 5", and the "train 6" are arranged on the rolling stock operation network model. As indicated in the lower region in Fig. 15, the three inspection slot nodes indicating the "inspection slot 1", the "inspection slot 2", and the "inspection slot 3" and the two controlling nodes for the number of inspections simultaneously allocated are arranged on the rolling stock operation network. Since the last arrival clock time of the "train 1" to the X station is 8:00, the "rolling stock train-unit 1" to which the "train 1" is allocated can use all the inspection slots, which are the "inspection slot 1" started at 8:00, the "inspection slot 2" started at 8:30, and the "inspection slot 3" started at 9:00. Therefore, as indicated by solid lines in Fig. 15, the node indicating the "train 1" is coupled with not only the links to the above-described nodes indicating the "train 4" and the "train 5" but also with the nodes indicating the "inspection slot 1", the "inspection slot 2", and the "inspection slot 3" by links. Similarly, as indicated by dashed-dotted lines in Fig. 15, the node indicating the "train 3" arriving at the X station at 8:25 is coupled with not only the link to the above-described node indicating the "train 6" but also with the nodes indicating the "inspection slot 1", the "inspection slot 2", and the "inspection slot 3" by links.

On the other hand, as for the "train 2" arriving at the X station at 7:45, since the day is not the inspection conducting day of the "rolling stock train-unit 2" allocated thereto, no links to any of the inspection slot nodes are generated, and as indicated by broken lines in Fig. 15, links are provided from the node indicating the "train 2" to the above-described node indicating the "train 4" and node indicating the "train 5".

The "inspection slot 1" is included only in the "inspection slot group 1", while the "inspection slot 3" is included only in the "inspection slot group 3". Accordingly, the node indicating the "inspection slot 1" and the node indicating the "inspection slot 2" are each coupled with a single controlling node for the number of inspections simultaneously allocated as indicated in the lower region in Fig. 15. On the other hand, since the "inspection slot 2" is included in both the "inspection slot group 1" and "inspection slot group 2", the node indicating the "inspection slot 2" is coupled with both the two controlling nodes for the number of inspections simultaneously allocated as indicated in the lower region in Fig. 15.

Additionally, a link between the controlling node for the number of inspections simultaneously allocated and the train node is generated between each controlling node for the number of inspections simultaneously allocated and a node indicating the train that departs from the X station at a clock time at or after the inspection termination clock time of the inspection slot corresponding to the controlling node for the number of inspections simultaneously allocated. In the rolling stock operation network model indicated in Fig. 15, all of the node indicating the "inspection slot 1" terminated at 8:45, the node indicating the "inspection slot 2" terminated at 8:30, and the node indicating the "inspection slot 3" terminated at 9:45 can generate links to the node indicating the "train 4" departing from the X station at 12:00, the node indicating the "train 5" departing from the X station at 11:45, and the node indicating the "train 6" departing from the X station at 13:00. Therefore, as indicated in Fig. 15, the node indicating the "train 4", the node indicating the "train 5", and the node indicating the "train 6" are all coupled with the two nodes for controlling the number of inspections simultaneously allocated by links.

### <Rolling Stock Scheduling Determination Processing>

The rolling stock scheduling determination unit 166 that receives the rolling stock operation network model from the network model creation unit 164 extracts a path starting from each rolling stock train-unit node. In this process, the rolling stock scheduling determination unit 166 extracts a path such that each train node is certainly included in any one of the paths only one time. As for a path starting from the rolling stock train-unit node corresponding to the rolling stock train-unit that has the inspection conducting day on the day, the rolling stock scheduling determination unit 166 extracts a path such that the path certainly includes a single inspection slot node. A problem related to the processing method of extracting a path from the network model is formulated as a multicommodity flow problem, and for example, there are proposed many methods for solving using algorithms such as the branch and bound method and the hill climbing method. The network model creation unit 164 extracts a path by using such already-existing algorithms.

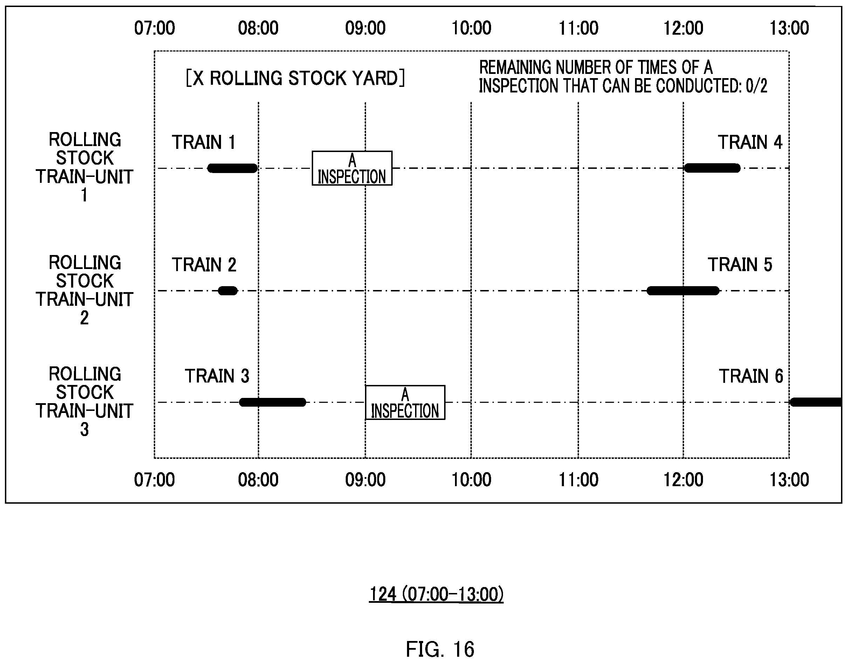

A configuration example of a screen displaying the rolling stock scheduling created by the above-described processing is illustrated in Fig. 16. Fig. 16 is a display example of the output unit 124 of the rolling stock scheduling creation device 1 according to this embodiment and illustrates the rolling stock scheduling of the "rolling stock train-unit 1", the "rolling stock train-unit 2", and the "rolling stock train-unit 3" in the time period from 7:00 to 13:00 on the same day. Fig. 16 illustrates that the "rolling stock train-unit 1" to which the "train 1" is allocated arrives at the X station and thereafter the A inspection is conducted on the "rolling stock train-unit 1" in the X rolling stock yard adjacent to the X station, and the "rolling stock train-unit 1" departs from the X station again as the "train 4" that is newly allocated thereto. Similarly, Fig. 16 illustrates also that the "rolling stock train-unit 3" to which the "train 3" is allocated arrives at the X station and thereafter the A inspection is conducted on the "rolling stock train-unit 3" in the X rolling stock yard adjacent to the X station, and the "rolling stock train-unit 3" departs from the X station again as the "train 6" that is newly allocated thereto. On the other hand, Fig. 16 illustrates also that the "rolling stock train-unit 2" on which no inspection is conducted on the day arrives at the X station as the "train 2" allocated thereto in advance and thereafter departs from the X station again as the "train 5" newly allocated thereto.

Constituents in the screen in the display screen example illustrated in Fig. 16 can be hidden as needed. Whether to display the constituents may be switched as needed by operation of the operator, for example.

As an example, the creation process of the rolling stock scheduling of the "rolling stock train-unit 1", the "rolling stock train-unit 2", and the "rolling stock train-unit 3" on one assumed date is described above mainly on the time period from 7:00 to 13:00 with reference to Figs. 8 to 16.

As described above, the rolling stock scheduling creation device 1 can create the rolling stock scheduling in which the inspection can be conducted in the X rolling stock yard on a predetermined date for the "rolling stock train-unit 1" and the "rolling stock train-unit 3" that have the inspection conducting day on the assumed date.

### <Effects>

According to the rolling stock scheduling creation device 1 described above, it is possible to accurately calculate the inspection conducting capacity of the rolling stock yard 102 in a predetermined time period based on the information on the shift of the inspector engaging in the inspection in the rolling stock yard 102, the information related to the availability of the inspection track held by the rolling stock yard 102, and the like. Consequently, it is possible to create rolling stock scheduling including an implementable inspection plan.

According to the rolling stock scheduling creation device 1 described above, it is possible to create a transportation plan and an inspection plan for the same rolling stock integrally by using the rolling stock operation network model obtained by representing scheduling of railroad rolling stock by a tree structure. Therefore, it is possible to create rolling stock scheduling that is more efficient than that of a case where a transportation plan and an inspection plan for the same rolling stock are created separately.

Additionally, according to the rolling stock scheduling creation device 1 described above, it is possible to create a transportation plan and an inspection plan for the same rolling stock integrally by using a single rolling stock operation network model. Therefore, there is no need to perform processing for giving consistency to a transportation plan and an inspection plan, and it is possible to form a rolling stock scheduling creation device with lower processing load than a case where a transportation plan and an inspection plan are created separately.

The embodiment of the present invention is described above with reference to the drawings. The descriptions of the above-described embodiment are for facilitating understanding of the present invention and are not intended to limit a technical scope of the present invention. The present invention may be changed and improved without departing from the intent of the above-described embodiment, and the present invention includes an equivalent thereof.

In the above-described embodiment, the rolling stock scheduling creation device 1 is described to be provided outside the rolling stock yard. However, the rolling stock scheduling creation device may be provided inside of each rolling stock yard 102. In this case, the inspector information data and the inspection track information data may be created for each rolling stock yard 102. Thus, when the rolling stock scheduling creation device is provided inside the rolling stock yard, and it is sufficient by using only the information related to the rolling stock, the inspectors, and the inspection tracks managed by the rolling stock yard 102, it is possible to form the rolling stock scheduling creation device more compact.

Even when the rolling stock scheduling creation device 1 is provided inside each rolling stock yard 102, the rolling stock scheduling creation devices in each rolling stock yard 102 may form a Peer to Peer (P2P) type network and communicate with each other through the communication network 106, for example. In this case, although the rolling stock scheduling creation device is provided in a specific rolling stock yard 102, it is possible to form the rolling stock scheduling creation device to use the information on the rolling stock, the inspectors, the inspection tracks and the like managed by another rolling stock yard 102 as needed.

When calculating the inspection conducting capacity for each time period of the rolling stock yard, the rolling stock scheduling creation device may use information on an inspection team to which the inspector engaging in the inspection in the rolling stock yard belongs.

Information indicating a day-off of the inspector may be recorded in the inspection team information data storage unit 186.

The rolling stock scheduling creation device may create rolling stock scheduling of the day in real time by dynamically generating the rolling stock operation network model. In this case, the data (see Fig. 6) indicating an unavailable clock time 604 of the inspection track stored in the inspection track information data storage unit 188 may be set based on the start clock time and the termination clock time of the inspection if there is an inspection being conducted at this point.

In the above-described embodiment, there is described that the rolling stock for which the rolling stock scheduling creation device creates scheduling is railroad rolling stock. However, if it is scheduling of rolling stock that is used in a transportation facility in which allocation of vehicles is made and periodic inspection for the rolling stock is conducted between commercial operations in a rolling stock yard, the rolling stock scheduling creation device of the present invention can create the scheduling favorably as with the case of creating the scheduling of the railroad rolling stock.

### [Reference Signs List]

- 1: rolling stock scheduling creation device
- 10: CPU
- 20: memory
- 30: I/O
- 40: storage
- 102: rolling stock yard
- 104: data terminal device
- 106: communication network
- 120: user interface unit
- 122: input unit
- 124: output unit
- 140: communication unit
- 160: data processing unit
- 162: inspection slot calculation unit
- 164: network model calculation unit
- 166: rolling stock scheduling determination unit
- 180: data storage unit
- 182: transportation plan information data storage unit
- 184: rolling stock train-unit information data storage unit
- 186: inspector information data storage unit
- 188: inspection track information data storage unit
- 190: inspection type information data storage unit
- 192: inspection slot information data storage unit
- 194: network model data storage unit
- 196: rolling stock scheduling data storage unit

## Claims

1. A rolling stock scheduling creation device that creates scheduling of railroad rolling stock and is formed as a computer, comprising:
a processor; and
a memory storing data used by the processor, wherein
the memory stores
transportation plan information which is information on travel of a train using a rolling stock train-unit including the railroad rolling stock,
rolling stock train-unit information which is information on an attribute and an inspection conducting schedule related to each rolling stock train-unit and scheduling, and
inspection capacity information which is information indicating inspection capacity of an inspection facility associated with the rolling stock train-unit, and
the processor
creates scheduling for the transportation plan information by applying the rolling stock train-unit information and selecting a train to which each rolling stock train-unit is allocatable, and
obtains inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, the inspection capacity information, and the scheduling of each rolling stock train-unit.

2. The rolling stock scheduling creation device according to claim 1, wherein
the processor creates the scheduling as a rolling stock scheduling data model represented by a tree structure, and
the rolling stock scheduling data model includes not only a node indicating a rolling stock train-unit of the railroad rolling stock and a node indicating a train to which the railroad rolling stock is allocated but also includes a node indicating inspection conducting capacity in a predetermined time period of a rolling stock yard in which an inspection for the railroad rolling stock is conducted on at least an inspection conducting day of the railroad rolling stock and a link that couples the node indicating the train and the node indicating the inspection conducting capacity in the predetermined time period of the rolling stock yard.

3. The rolling stock scheduling creation device according to claim 2, wherein
the node indicating the inspection conducting capacity in the predetermined time period of the rolling stock yard includes a node indicating an inspection slot set depending on a required time for the inspection and a node indicating an inspection track held by the rolling stock yard.

4. The rolling stock scheduling creation device according to claim 3, wherein
the number of the nodes indicating the inspection slot included in the rolling stock scheduling data model is calculated based on a shift of an inspector who conducts the inspection in the rolling stock yard.

5. The rolling stock scheduling creation device according to claim 3, wherein
the number of the nodes indicating the inspection track included in the rolling stock scheduling data model is calculated based on the number of inspection tracks available in the predetermined time period out of inspection tracks held by the rolling stock yard.

6. A rolling stock scheduling creation method of creating scheduling of railroad rolling stock in which a computer includes a processor and a memory storing data used by the processor, comprising:
creating scheduling for transportation plan information which is information on travel of a train using a rolling stock train-unit including the railroad rolling stock by applying rolling stock train-unit information which is information on an attribute and an inspection conducting schedule related to each rolling stock train-unit and scheduling and selecting a train to which each rolling stock train-unit is allocatable; and
obtaining inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, inspection capacity information which is information indicating inspection capacity of an inspection facility associated with the rolling stock train-unit, and scheduling of each rolling stock train-unit.

7. The rolling stock scheduling creation method according to claim 6, wherein
the processor creates the scheduling as a rolling stock scheduling data model represented by a tree structure, and
the rolling stock scheduling data model includes not only a node indicating a rolling stock train-unit of the railroad rolling stock and a node indicating a train to which the railroad rolling stock is allocated but also includes a node indicating inspection conducting capacity in a predetermined time period of a rolling stock yard in which an inspection for the railroad rolling stock is conducted on at least an inspection conducting day of the railroad rolling stock and a link that couples the node indicating the train and the node indicating the inspection conducting capacity in the predetermined time period of the rolling stock yard.

8. The rolling stock scheduling creation method according to claim 7, wherein
the node indicating the inspection conducting capacity in the predetermined time period of the rolling stock yard includes a node indicating an inspection slot set depending on a required time for the inspection and a node indicating an inspection track held by the rolling stock yard.

9. The rolling stock scheduling creation method according to claim 8, wherein
the number of the nodes indicating the inspection slot included in the rolling stock scheduling data model is calculated based on a shift of an inspector who conducts the inspection in the rolling stock yard.

10. The rolling stock scheduling creation method according to claim 8, wherein
the number of the nodes indicating the inspection track included in the rolling stock scheduling data model is calculated based on the number of inspection tracks available in the predetermined time period out of inspection tracks held by the rolling stock yard.

11. A rolling stock scheduling creation program for creating scheduling of railroad rolling stock, the program causing a computer including a processor and a memory storing data used by the processor to fulfill functions of:
creating scheduling for transportation plan information which is information on travel of a train using a rolling stock train-unit including the railroad rolling stock by applying rolling stock train-unit information which is information on an attribute and an inspection conducting schedule related to each rolling stock train-unit and scheduling and selecting a train to which each rolling stock train-unit is allocatable, and
obtaining inspection conducting schedule information on each rolling stock train-unit from the rolling stock train-unit information to reflect an inspection conducting schedule of each rolling stock train-unit designated in the inspection conducting schedule information on the scheduling based on the inspection conducting schedule information, inspection capacity information which is information indicating inspection capacity of an inspection facility associated with the rolling stock train-unit, and scheduling of each rolling stock train-unit.

12. The rolling stock scheduling creation program according to claim 11, wherein
the processor creates the scheduling as a rolling stock scheduling data model represented by a tree structure, and
the rolling stock scheduling data model includes not only a node indicating a rolling stock train-unit of the railroad rolling stock and a node indicating a train to which the railroad rolling stock is allocated but also includes a node indicating inspection conducting capacity in a predetermined time period of a rolling stock yard in which an inspection for the railroad rolling stock is conducted on at least an inspection conducting day of the railroad rolling stock and a link that couples the node indicating the train and the node indicating the inspection conducting capacity in the predetermined time period of the rolling stock yard.
